# EUROPÄISCHE PATENTSCHRIFT

(11) **EP 3 051 506 B1**
(45) Veröffentlichungstag und Bekanntmachung des Hinweises auf die Patenterteilung: **05.08.2020**
(21) Anmeldenummer: 16153168.6
(22) Anmeldetag: 28.01.2016
(51) Int. Cl.: G07D 9/00, H02K 5/167, H02K 7/102, H02K 7/12

(54) **VORRICHTUNG ZUM AUSGEBEN VON MÜNZEN**
DEVICE FOR DISPENSING COINS
DISPOSITIF DE DISTRIBUTION DE PIECES DE MONNAIE

(30) Priorität: 30.01.2015 DE 102015101423
(43) Veröffentlichungstag der Anmeldung: 03.08.2016
(73) Patentinhaber: Crane Payment Innovations Ltd., Royton Oldham OL2 6JZ (GB)
(72) Erfinder: Meyer, Wilfried, 21614 Buxtehude (DE); Herrmann, Matthias, 21717 Fredenbeck (DE); Cohrs, Hans-Ulrich, 21640 Horneburg (DE); Merems, Wladislaw, 21614 Buxtehude (DE)
(74) Vertreter: Peterreins Schley

(56) Entgegenhaltungen:
- EP-A2- 0 080 842
- DD-A1- 60 910
- DE-A1- 1 675 556
- DE-A1- 1 708 310
- DE-T2-602005 001 008
- DE-U1- 20 013 672

## Beschreibung

Die Erfindung betrifft eine Vorrichtung zum Ausgeben von Münzen, umfassend eine Münzfördereinrichtung und einen Münzcontainer, aus dem Münzen der Münzfördereinrichtung zugeführt werden können, sowie einen Münzauslass zur Ausgabe von Münzen, weiter umfassend einen elektrischen Antriebsmotor zum Antreiben der Münzfördereinrichtung, wobei bei einem Antreiben der Münzfördereinrichtung Münzen durch die Münzfördereinrichtung zu dem Münzauslass gefördert und ausgegeben werden, und wobei der elektrische Antriebsmotor über ein Getriebe auf die Münzfördereinrichtung wirkt.

Derartige Münzhopper besitzen eine Münzfördereinrichtung, die mittels eines elektrischen Antriebsmotors über ein Getriebe angetrieben wird. Aus einem Münzcontainer werden Münzen der Münzfördereinrichtung zugeführt. Durch Antreiben der Münzfördereinrichtung mittels des elektrischen Antriebsmotors werden die Münzen zu dem Münzauslass gefördert und beispielsweise an einen Kunden ausgegeben. Als Münzfördereinrichtungen werden beispielsweise Drehscheiben oder Münzförderketten eingesetzt.

Derartige Münzhopper werden zum Beispiel in Spielautomaten eingesetzt. Dabei kommt es immer wieder zu Manipulationsversuchen, um eine unbefugte Auszahlung der Münzen zu bewirken. Beispielsweise wird der Auszahlmechanismus, insbesondere das Getriebe, von außen mechanisch betätigt (angetrieben), und dadurch ein Antreiben der Münzfördereinrichtung und eine Auszahlung der Münzen bewirkt. Dies erfolgt häufig mit Handkurbeln manuell und im regulären Betrieb eine mit solchen Münzhoppern ausgestatteten Auszahlsystems, beispielsweise eines Spielautomaten. Um eine solche Manipulation zu verhindern, ist bereits vorgeschlagen worden, Getriebestufen durch zusätzliche elektromechanische Vorrichtungen gegen externes Drehen zu sichern, zum Beispiel Elektromagneten mit Blockierstiften. Allerdings kann die entsprechende Blockierwirkung mit ausreichendem Kraftaufwand manuell überwunden werden. Auch kommen selbsthemmende Schneckengetriebe zum Einsatz, die bei einer manuellen ausgangsseitigen Betätigung über eine Selbsthemmung verfügen. Eine Selbsthemmung tritt bei Schnecken allerdings nur bei kleinen Schneckensteigungen auf, in der Regel bei Schneckensteigungen von 3° oder weniger. Bei solchen kleinen Schneckensteigungen ist der Wirkungsgrad des Schneckengetriebes gering und ein Dauerbetrieb mit starker Erwärmung verbunden.

DE 602005001008 T2 betrifft eine Münzausgabevorrichtung mit mehreren entnehmbaren Münzausgabegeräten, die jeweils einen Münzbehälter und einen Motor umfassen, mit dem Münzen aus dem Münzbehälter zu einem Münzauslass bewegt werden können. Dabei wird z.B. durch ein Schneckengetriebe verhindert, dass die Münzausgabevorrichtung von außen angetrieben werden kann.

Der Erfindung liegt daher die Aufgabe zugrunde, eine Vorrichtung der eingangs genannten Art bereitzustellen, die bei hohem Wirkungsgrad eine möglichst große Sicherheit gegen eine mechanische Manipulation bietet.

Die Erfindung löst die Aufgabe durch den Gegenstand von Anspruch 1. Vorteilhafte Ausgestaltungen finden sich in den abhängigen Ansprüchen, der Beschreibung und den Figuren.

Für eine Vorrichtung der eingangs genannten Art löst die Erfindung die Aufgabe dadurch,
- dass der elektrische Antriebsmotor mindestens eine mit der Motorwelle des elektrischen Antriebsmotors verbundene Bremsscheibe aufweist, die bei nicht betätigtem elektrischen Antriebsmotor in einem die Drehbewegung der Motorwelle hemmenden Kontakt mit mindestens einer Gegenfläche des elektrischen Antriebsmotors steht,
- dass bei einer mechanischen Betätigung des Getriebes ohne elektrische Betätigung des elektrischen Antriebsmotors eine Zugkraft in einer ersten axialen Richtung auf die Motorwelle wirkt, so dass die die Drehbewegung der Motorwelle hemmende Bremskraft der mindestens einen Bremsscheibe mit der mindestens einen Gegenfläche des elektrischen Antriebsmotors mit zunehmender Zugkraft zunimmt, und
- dass die Motorwelle bei einer elektrischen Betätigung des elektrischen Antriebsmotors in einer der ersten Richtung entgegengesetzten zweiten Richtung axial verlagert wird, wodurch der die Drehbewegung der Motorwelle hemmende Kontakt der mindestens einen Bremsscheibe mit der mindestens einen Gegenfläche des elektrischen Antriebsmotors aufgehoben ist.

Wie erwähnt, handelt es sich bei der erfindungsgemäßen Vorrichtung zum Ausgeben von Münzen insbesondere um einen Münzhopper. Sofern in diesem Zusammenhang von Münzen gesprochen wird, umfasst dies allgemein scheibenförmige Wertgegenstände, also neben metallischen (Geld-)Münzen beispielsweise auch Metall- oder Kunststoffmarken (Token) etc.. Wie ebenfalls erläutert, werden bei einem solchen Münzhopper der Münzfördereinrichtung Münzen aus einem Münzcontainer zugeführt. Zum Auszahlen der Münzen wird die Münzfördereinrichtung durch den elektrischen Antriebsmotor über das Getriebe angetrieben, so dass diese aus dem Münzcontainer zugeführte Münzen zu dem Münzauslass befördert und ausgibt, beispielsweise an einen Kunden. Wie ebenfalls eingangs erwähnt, können die erfindungsgemäßen Vorrichtungen beispielsweise in Glücksspielautomaten in Spielhallen zum Einsatz kommen.

Erfindungsgemäß ist der elektrische Antriebsmotor zusätzlich mit einer Bremsscheibe versehen. Die Bremsscheibe ist mit der Motorwelle des elektrischen Antriebsmotors verbunden und befindet sich bei nicht betätigtem elektrischem Antriebsmotor, also wenn keine Kraft auf das Getriebe bzw. die Motorwelle wirkt, in einem die Drehbewegung der Motorwelle hemmenden Kontakt mit mindestens einer Gegenfläche des elektrischen Antriebsmotors. Dieser hemmende Kontakt besteht also bereits bevor in manipulativer Weise eine mechanische Kraft auf das Getriebe ausgeübt wird. Wird nun in der eingangs erläuterten Weise im Zuge eines Manipulationsversuchs das Getriebe motorausgangsseitig mechanisch betätigt, ohne dass der Antriebsmotor elektrisch betätigt wird, wirkt aufgrund der motorausgangsseitigen Getriebebetätigung eine Zugkraft in einer ersten axialen Richtung auf die Motorwelle. Diese Zugkraft zieht die mindestens eine Bremsscheibe weiter gegen die mindestens eine Gegenfläche des elektrischen Antriebsmotors und verstärkt den die Drehbewegung der Motorwelle hemmenden Kontakt bzw. die die Drehbewegung der Motorwelle hemmende Bremskraft.

Durch diesen Mechanismus ist weiterhin sichergestellt, dass die durch die Bremsscheibe bewirkte Hemmung der Drehung der Antriebswelle und damit der Betätigung des Getriebes zum Antreiben der Münzfördereinrichtung mit zunehmender Zugkraft ebenfalls weiter zunimmt. Das erfindungsgemäße Zusammenwirken der mindestens einen Bremsscheibe mit der mindestens einen Gegenfläche des elektrischen Antriebsmotors führt also zu einer der mechanischen Manipulation entgegenstehenden Selbsthemmung. Erst eine ordnungsgemäße elektrische Betätigung des elektrischen Antriebsmotors führt aufgrund einer hierdurch entstehenden Zugkraft auf die Motorwelle in einer der ersten Richtung entgegengesetzten zweiten Richtung zu einer axialen Verlagerung der Motorwelle in diese zweite Richtung, so dass die mindestens eine Bremsscheibe von der mindestens einen Gegenfläche des elektrischen Antriebsmotors gelöst wird und die Hemmung der Drehbewegung der Motorwelle und damit des Getriebes aufgehoben wird. Insbesondere führt dabei das am Antriebszahnrad erzeugte Drehmoment zu der die Hemmung der Drehbewegung aufhebenden axialen Verlagerung der Motorwelle.

Bei der erfindungsgemäß durch die Bremsscheibe bereitgestellten Selbsthemmung ist das bei einer eingangs erläuterten manipulativen ausgangsseitigen mechanischen Betätigung des Getriebes erzeugte Antriebsmoment kleiner als die dabei erzeugte Hemmung. Durch die Zunahme der Hemmung mit einer Zunahme der bei einer manipulativen Betätigung erzeugten Zugkraft ist sichergestellt, dass es auf diese Weise zumindest im Rahmen der manuell aufbringbaren Kräfte nie zu einem Antreiben der Münzfördereinrichtung und damit einem Auszahlen der Münzen kommen kann. Gleichzeitig wird aufgrund der vollständigen Aufhebung der Hemmung im ordnungsgemäßen Normalbetrieb des elektrischen Antriebsmotors ein guter Wirkungsgrad erreicht.

Nach einer Ausgestaltung kann der die Drehbewegung der Motorwelle hemmende Kontakt der mindestens einen Bremsscheibe mit der mindestens einen Gegenfläche des elektrischen Antriebsmotors ein Reibkontakt sein. Die Bremsscheibe und die entsprechende Gegenfläche können dann besonders einfach ausgestaltet werden. Gleichzeitig wird die erfindungsgemäße hohe Manipulationssicherheit zuverlässig erreicht. Es ist jedoch auch möglich, dass der die Drehbewegung der Motorwelle hemmende Kontakt der mindestens einen Bremsscheibe mit der mindestens einen Gegenfläche des elektrischen Antriebsmotors ein formschlüssiger Kontakt ist. Ein solcher formschlüssiger Kontakt kann beispielsweise nach Art einer Klauenkupplung zwischen der Bremsscheibe und der entsprechenden Gegenfläche realisiert sein. Ein formschlüssiger Kontakt kann auch in Kombination mit einem Reibkontakt vorliegen.

Nach einer weiter bevorzugten Ausgestaltung kann das Getriebe eine an der Motorwelle angeordnete Schnecke und ein mit der Schnecke in Eingriff stehendes Zahnrad umfassen. Mit solchen Schneckengetrieben lassen sich zuverlässig und mit hohem Wirkungsgrad die zum Antreiben der Münzfördereinrichtung erforderlichen Antriebskräfte realisieren. Das Getriebe kann darüber hinaus selbstverständlich weitere Zahnräder oder weitere andere Getriebeelemente umfassen.

Nach einer besonders bevorzugten Ausgestaltung ist es möglich, dass das durch die Schnecke und das Zahnrad gebildete Schneckengetriebe selbst nicht selbsthemmend ist. Die Schnecke kann entsprechend einen Schneckensteigungswinkel von mehr als 3°, vorzugsweise mehr als 5°, besitzen. Bei der vorgenannten Ausgestaltung wird die Selbsthemmung also (nur) durch die mindestens eine Bremsscheibe erreicht. Eine Selbsthemmung durch das Schneckengetriebe selbst ist nicht mehr erforderlich. Durch Vorsehen eines nicht-selbsthemmenden Schneckengetriebes kann dieses größere Schneckensteigungen besitzen und besitzt daher einen höheren Wirkungsgrad mit einer geringeren Erwärmung im Dauerbetrieb.

Nach einer weiteren Ausgestaltung kann vorgesehen sein, dass die die Drehbewegung der Motorwelle hemmende Bremskraft der mindestens einen Bremsscheibe mit der mindestens einen Gegenfläche des elektrischen Antriebsmotors proportional mit der Zugkraft zunimmt. Durch eine proportionale Zunahme der Hemmung mit der Zugkraft wird sichergestellt, dass es nie zu einem manipulativen manuellen Antreiben der Münzfördereinrichtung kommen kann.

Erfindungsgemäß ist mindestens eine Bremsscheibe innerhalb des elektrischen Antriebsmotors auf der Antriebswelle angeordnet und die Gegenfläche durch eine Innenfläche des elektrischen Antriebsmotors gebildet. Es ist somit eine interne Brems scheibe vorgesehen, die innerhalb des Gehäuses des elektrischen Antriebsmotors eingebaut wird. Die Bremsscheibe bildet eines der Axiallager der Motorwelle in dem elektrischen Antriebsmotor.

Selbstverständlich ist auch eine Kombination möglich, bei der eine oder mehrere intern angeordnete Bremsscheiben und eine oder mehrere extern angeordnete Bremsscheiben vorgesehen sind.

Die Münzfördereinrichtung kann eine durch den elektrischen Antriebsmotor über das Getriebe drehend angetriebene Drehscheibe oder eine durch den elektrischen Antriebsmotor über das Getriebe angetriebene Münzförderkette oder ein durch den elektrischen Antriebsmotor über das Getriebe angetriebenes Münzförderband sein.

Ein Ausführungsbeispiel der Erfindung wird nachfolgend anhand von Figuren näher erläutert. Es zeigen schematisch:
- Fig. 1: eine erfindungsgemäße Vorrichtung in einer teilweise aufgeschnittenen perspektivischen Ansicht,
- Fig. 2: ein Detail der Vorrichtung aus Fig. 1 in einer perspektivischen Ansicht, aus Veranschaulichungsgründen ohne Gehäuse des Antriebsmotors,
- Fig. 3: einen in der Vorrichtung aus Fig. 1 eingesetzten elektrischen Antriebsmotor nach einem ersten Ausführungsbeispiel in einer Schnittansicht, und
- Fig. 4: einen in der Vorrichtung aus Fig. 1 eingesetzten elektrischen Antriebsmotor nach einem zweiten Ausführungsbeispiel in einer Schnittansicht.

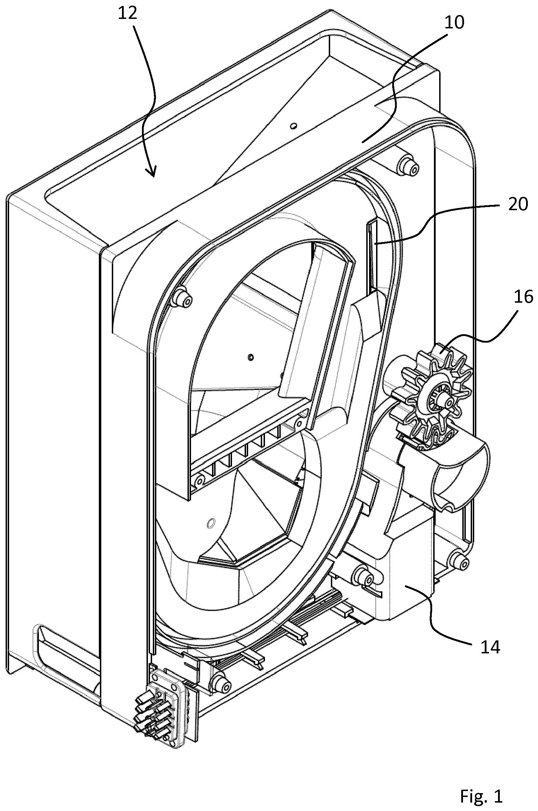

Soweit nichts anderes angegeben ist, bezeichnen in den Figuren gleiche Bezugszeichen gleiche Gegenstände. Bei der in den Figuren gezeigten erfindungsgemäßen Vorrichtung zum Ausgeben von Münzen handelt es sich um einen Münzhopper. Der Münzhopper besitzt ein allgemein bei dem Bezugszeichen 10 gezeigtes Gehäuse und einen Münzcontainer 12 zur Aufnahme von Münzen. Aus dem Münzcontainer 12 werden Münzen einer in der rückseitigen Ansicht der Fig. 1 nicht näher dargestellten Münzfördereinrichtung, vorliegend einer Münzförderkette, zugeführt. Die Münzförderkette wird über einen in Fig. 1 in einem Gehäuse 14 angeordneten elektrischen Antriebsmotor und ein Getriebe angetrieben, von dem in Fig. 1 ein erstes Zahnrad 16 und ein zweites mit dem ersten Zahnrad 16 kämmendes Zahnrad 18 teilweise zu erkennen sind. Durch elektrisches Betätigen des elektrischen Antriebsmotors wird die Münzförderkette über das Getriebe angetrieben. Dabei werden Münzen aus dem Münzcontainer 12 von der Münzförderkette zu einem Münzauslass 20 gefördert und ausgegeben, beispielsweise an einen Kunden. Dieser grundsätzliche Aufbau eines Münzhoppers ist bekannt und soll daher nicht näher erläutert werden.

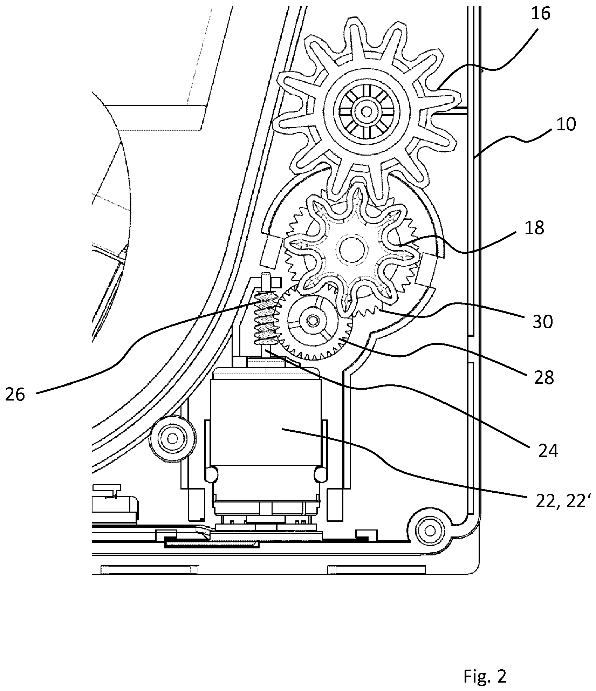

In Fig. 2 ist aus Veranschaulichungsgründen das Gehäuse 14 des elektrischen Antriebsmotors nicht gezeigt und der elektrische Antriebsmotor bei dem Bezugszeichen 22, 22' zu erkennen. Die Motorwelle 24 des elektrischen Antriebsmotors 22, 22' weist eine Schnecke 26 auf, die mit einem dritten Zahnrad 28 kämmt. Das dritte Zahnrad 28 treibt bei einer Drehbewegung über ein viertes Zahnrad 30 das zweite Zahnrad 18 und das erste Zahnrad 16 drehend an, wodurch wiederum die Münzförderkette zum Auszahlen von Münzen angetrieben wird. In dem gezeigten Beispiel handelt es sich bei dem durch die Schnecke 26 und das dritte Zahnrad 28 gebildete Schneckengetriebe um ein nicht-selbsthemmendes Schneckengetriebe. Die Schnecke 26 kann zum Beispiel eine Schneckensteigung von mehr als 3°, vorzugsweise mehr als 5° aufweisen.

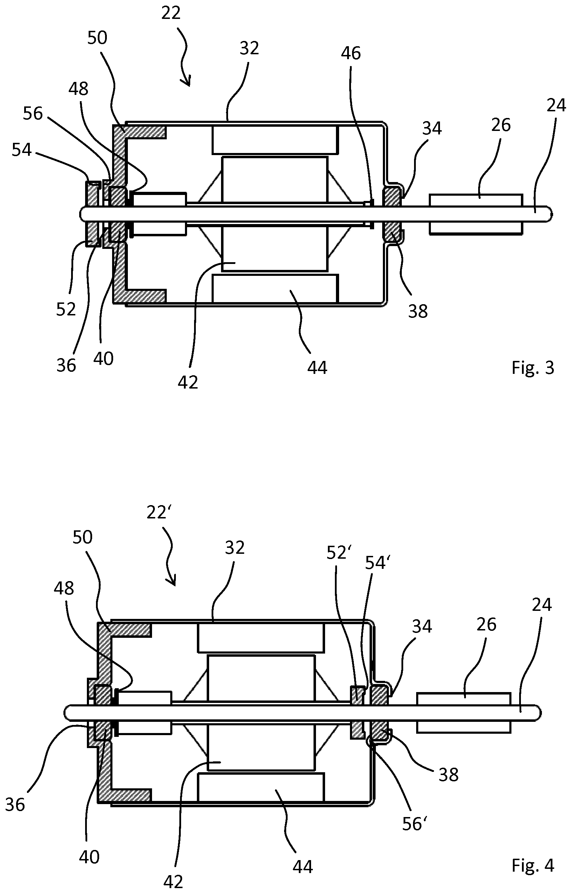

In Fig. 3 ist in einer Schnittansicht eine erste Ausgestaltung eines bei der erfindungsgemäßen Vorrichtung einsetzbaren elektrischen Antriebsmotors gezeigt, der entsprechend in der in den Figuren 1 und 2 gezeigten Vorrichtung zum Einsatz kommen kann. Der in Fig. 3 gezeigte elektrische Antriebsmotor 22 besitzt ein beispielsweise zylindrisches Gehäuse 32 mit einer vorderen stirnseitigen Öffnung 34 und einer hinteren stirnseitigen Öffnung 36. In der vorderen stirnseitigen Öffnung 34 ist ein vorderes Lager 38 und in der hinteren stirnseitigen Öffnung 36 ein hinteres Lager 40 angeordnet. Die Motorwelle 24 ist durch die Lager 38, 40 durch die vordere und hintere stirnseitige Öffnung 34, 36 des Gehäuses 32 hindurchgeführt. Die Motorwelle 24 ist in an sich bekannter Weise drehfest mit dem Rotor 42 des elektrischen Antriebsmotors verbunden. Der Stator des elektrischen Antriebsmotors 22 ist bei dem Bezugszeichen 44 gezeigt. Dabei ist die Motorwelle 24 an dem Rotor 42 im Bereich eines vorderen Axiallagers 46 und eines hinteren Axiallagers 48 axial gelagert. Die hintere stirnseitige Öffnung 36 ist durch einen einen Teil des zylindrischen Gehäuses 32 bildenden Stirnseitenabschnitt 50 gebildet.

Bei dem Beispiel der Fig. 3, welches nicht unter den Gegenstand der Ansprüche fällt, ist außerhalb des Gehäuses 32 an dem der Schnecke 26 abgewandten Ende der Motorwelle 24 eine Bremsscheibe 52 auf der Motorwelle 24 befestigt. Die Bremsscheibe 52 besitzt eine dem Gehäuse 32 zugewandte Bremsfläche 54, die dazu ausgebildet ist, mit einer an dem Gehäuse 32, nämlich dem Stirnseitenabschnitt 50, des elektrischen Antriebsmotors 22 ausgebildeten Gegenfläche 56 zusammenzuwirken. In dem in Fig. 3 gezeigten Betriebszustand befindet sich die Bremsscheibe 52 außer Kontakt mit der Gegenfläche 56. Dieser Betriebszustand wird eingenommen bei einer ordnungsgemäßen elektrischen Betätigung des Antriebsmotors 22. Es kommt dann durch das Zusammenwirken der Schnecke 26 mit den weiteren Zahnrädern, insbesondere dem dritten Zahnrad 28, zu einer axialen Verlagerung der Motorwelle 24 in Fig. 3 nach links, so dass die Bremsscheibe 52 außer Eingriff mit der Gegenfläche 56 kommt. Die Motorwelle 24 kann dann ohne Hemmung durch die Bremsscheibe 52 angetrieben werden und es kann zum Auszahlen von Münzen ein entsprechendes Antreiben der Münzförderkette erfolgen.

Wird der elektrische Antriebsmotor stromlos geschaltet, lässt die auf die Motorwelle 24 in Fig. 3 nach links wirkende Kraft nach und die Motorwelle 24 verlagert sich in entgegengesetzter axialer Richtung, in Fig. 3 also nach rechts, so dass die Bremsscheibe 52 mit ihrer Bremsfläche 54 in Reibkontakt mit der Gegenfläche 56 kommt. In diesem Zustand wird durch den Reibkontakt eine Hemmung der Drehbewegung der Motorwelle 24 bewirkt. Wird nun im Rahmen eines Manipulationsversuchs manuell das Getriebe, insbesondere eines der Zahnräder des Getriebes, abtriebsseitig betätigt, führt dies zu einer Zugkraft auf die Motorwelle 24 in Fig. 3 nach rechts, die den Reibkontakt und damit die Hemmung der Drehbewegung der Motorwelle 24 verstärkt, in dem gezeigten Beispiel proportional zu der Zugkraft. Die der Drehung der Motorwelle 24 und damit des Getriebes und der Münzförderkette entgegen wirkende Hemmung ist dabei jederzeit größer als die manuell zur Drehung des Getriebes aufgebrachte Kraft. Ein Betätigen der Münzförderkette durch ein manuelles Betätigen des Getriebes ist daher nicht möglich.

Der in Fig. 4 gezeigte elektrische Antriebsmotor 22', der erfindungsgemäß in der in den Figuren 1 und 2 gezeigten Vorrichtung zum Einsatz kommt, entspricht weitestgehend dem in Fig. 3 gezeigten elektrischen Antriebsmotor 22, so dass soweit möglich dieselben Bezugszeichen verwendet werden. Im Unterschied zu dem elektrischen Antriebsmotor 22 der Fig. 3 ist bei dem elektrischen Antriebsmotor 22' der Fig. 4 anstelle der in Fig. 3 externen Drehscheibe 52 eine interne Drehscheibe 52' innerhalb des Gehäuses 32 des elektrischen Antriebsmotors auf der Motorwelle 24 befestigt. Die Bremsscheibe 52' bildet das vordere Axiallager für die Motorwelle 24. In diesem Fall wirkt die Bremsfläche 54' der Bremsscheibe 52' mit einer entsprechenden Gegenfläche 56' des vorderen Lagers 38 der Motorwelle 24 zusammen.

Fig. 4 zeigt wiederum den Betriebszustand einer ordnungsgemäßen elektrischen Betätigung des elektrischen Antriebsmotors 22', so dass die Bremsscheibe 52' außer Kontakt mit der Gegenfläche 56' ist. Die Funktion der Bremsscheibe 52' bei dem elektrischen Antriebsmotor 22' der Fig. 4 ist im Übrigen identisch zu der Funktion der Bremsscheibe 52 des elektrischen Antriebsmotors 22 nach Fig. 3, so dass in dieser Hinsicht auf die obigen Erläuterungen verwiesen werden kann.

Beide Ausführungsformen der Figuren 3 und 4 erlauben bei höchster Sicherheit gegen mechanische Manipulation den Einsatz eines Schneckengetriebes mit hohem Wirkungsgrad und geringer Wärmeentwicklung im Dauerbetrieb.

## Patentansprüche

1. Vorrichtung zum Ausgeben von Münzen, umfassend eine Münzfördereinrichtung und einen Münzcontainer (12), aus dem Münzen der Münzfördereinrichtung zugeführt werden können, sowie einen Münzauslass (20) zur Ausgabe von Münzen, weiter umfassend einen elektrischen Antriebsmotor (22, 22') zum Antreiben der Münzfördereinrichtung, wobei bei einem Antreiben der Münzfördereinrichtung Münzen durch die Münzfördereinrichtung zu dem Münzauslass (20) gefördert und ausgegeben werden, und wobei der elektrische Antriebsmotor (22, 22') über ein Getriebe auf die Münzfördereinrichtung wirkt, **dadurch gekennzeichnet,**
- **dass** der elektrische Antriebsmotor (22, 22') mindestens eine mit der Motorwelle (24) des elektrischen Antriebsmotors (22, 22') verbundene Bremsscheibe (52, 52') aufweist, die bei nicht betätigtem elektrischen Antriebsmotor (22, 22') in einem die Drehbewegung der Motorwelle (24) hemmenden Kontakt mit mindestens einer Gegenfläche (56, 56') des elektrischen Antriebsmotors (22, 22') steht,
- **dass** bei einer mechanischen Betätigung des Getriebes ohne elektrische Betätigung des elektrischen Antriebsmotors (22, 22') eine Zugkraft in einer ersten axialen Richtung auf die Motorwelle (24) wirkt, so dass die die Drehbewegung der Motorwelle (24) hemmende Bremskraft der mindestens einen Bremsscheibe (52, 52') mit der mindestens einen Gegenfläche (56, 56') des elektrischen Antriebsmotors (22, 22') mit zunehmender Zugkraft zunimmt,
- **dass** die Motorwelle (24) bei einer elektrischen Betätigung des elektrischen Antriebsmotors (22, 22') in einer der ersten Richtung entgegengesetzten zweiten Richtung axial verlagert wird, wodurch der die Drehbewegung der Motorwelle (24) hemmende Kontakt der mindestens einen Bremsscheibe (52, 52') mit der mindestens einen Gegenfläche (56, 56') des elektrischen Antriebsmotors (22, 22') aufgehoben ist,
- **dass** mindestens eine Bremsscheibe (52') innerhalb des elektrischen Antriebsmotors (22') auf der Antriebswelle angeordnet ist und die Gegenfläche (56') durch eine Innenfläche des elektrischen Antriebsmotors (22') gebildet ist, und
- **dass** die Bremsscheibe (52') eines der Axiallager der Motorwelle (24) in dem elektrischen Antriebsmotor (22') bildet.

2. Vorrichtung nach Anspruch 1, **dadurch gekennzeichnet, dass** der die Drehbewegung der Motorwelle (24) hemmende Kontakt der mindestens einen Bremsscheibe (52, 52') mit der mindestens einen Gegenfläche (56, 56') des elektrischen Antriebsmotors (22, 22') ein Reibkontakt ist.

3. Vorrichtung nach einem der Ansprüche 1 oder 2, **dadurch gekennzeichnet, dass** der die Drehbewegung der Motorwelle (24) hemmende Kontakt der mindestens einen Bremsscheibe (52, 52') mit der mindestens einen Gegenfläche (56, 56') des elektrischen Antriebsmotors (22, 22') ein formschlüssiger Kontakt ist.

4. Vorrichtung nach einem der vorhergehenden Ansprüche, **dadurch gekennzeichnet, dass** das Getriebe eine an der Motorwelle (24) angeordnete Schnecke (26) und ein mit der Schnecke (26) in Eingriff stehendes Zahnrad (28) umfasst.

5. Vorrichtung nach Anspruch 4, **dadurch gekennzeichnet, dass** das durch die Schnecke (26) und das Zahnrad (28) gebildete Schneckengetriebe selbst nicht selbsthemmend ist.

6. Vorrichtung nach einem der Ansprüche 4 oder 5, **dadurch gekennzeichnet, dass** die Schnecke (26) einen Schneckensteigungswinkel von mehr als 3°, vorzugsweise mehr als 5°, besitzt.

7. Vorrichtung nach einem der vorhergehenden Ansprüche, **dadurch gekennzeichnet, dass** die die Drehbewegung der Motorwelle (24) hemmende Bremskraft der mindestens einen Bremsscheibe (52, 52') mit der mindestens einen Gegenfläche (56, 56') des elektrischen Antriebsmotors (22, 22') proportional mit der Zugkraft zunimmt.

8. Vorrichtung nach einem der vorhergehenden Ansprüche, **dadurch gekennzeichnet, dass** die Münzfördereinrichtung eine Drehscheibe oder eine Münzförderkette oder ein Münzförderband ist.

## Claims

1. Device for dispensing coins, comprising a coin conveyor system and a coin container (12), from which coins can be supplied to the coin conveyor system, and a coin outlet (20) for dispensing coins, further comprising an electric drive motor (22, 22') for driving the coin conveyor system, wherein, when driving the coin conveyor system, coins are conveyed through the coin conveyor system to the coin outlet (20) and dispensed, and wherein the electric drive motor (22, 22') acts upon the coin conveyor system through a transmission,
**characterized in that**
the electric drive motor (22, 22') comprises at least one brake disc (52, 52') connected with the motor shaft (24) of the electric drive motor (22, 22'), which is in a contact inhibiting the rotational movement of the motor shaft (24) with at least one counter-surface (56, 56') of the electric drive motor (22, 22') when the electric drive motor (22, 22') is not actuated;
a tensile force is acting in a first axial direction on the motor shaft (24) upon a mechanical actuation of the transmission without electrical actuation of the electric drive motor (22, 22'), such that the braking force inhibiting the rotational movement of the motor shaft (24) of the at least one brake disc (52, 52') with the at least one counter-surface (56, 56') of the electric drive motor (22, 22') increases when the tensile force increases;
the motor shaft (24) is axially displaced in a second direction opposite to the first direction when the electric drive motor (22, 22') is electrically actuated, whereby the contact inhibiting the rotational movement of the motor shaft (24) of the at least one brake disc (52, 52') with the at least one counter-surface (56, 56') of the electric drive motor (22, 22') is cancelled;
at least one brake disc (52') is arranged within the electric drive motor (22') on the driving shaft, and the counter-surface (56') is formed by an inner surface of the electric drive motor (22'); and
the brake disc (52') constitutes one of the axial bearings of the motor shaft (24) within the electric drive motor (22').

2. The device according to claim 1, **characterized in that** the contact inhibiting the rotational movement of the motor shaft (24) of the at least one brake disc (52, 52') with the at least one counter-surface (56, 56') of the electric drive motor (22, 22') is a frictional contact.

3. The device according to any one of claims 1 or 2, **characterized in that** the contact inhibiting the rotational movement of the motor shaft (24) of the at least one brake disc (52, 52') with the at least one counter-surface (56, 56') of the electric drive motor (22, 22') is an interlocking contact.

4. The device according to any one of the previous claims, **characterized in that** the transmission comprises a worm (26) arranged on the motor shaft (24) and a gear (28) meshed with the worm (26).

5. The device according to claim 4, **characterized in that** the worm drive constituted by the worm (26) and the gear (28) is non self-locking.

6. The device according to any one of claims 4 or 5, **characterized in that** the worm (26) has a lead angle of more than 3°, preferably more than 5°.

7. The device according to any one of the previous claims, **characterized in that** the braking force inhibiting the rotational movement of the motor shaft (24) of the at least one brake disc (52, 52') with the at least one counter-surface (56, 56') of the electric drive motor (22, 22') increases proportionally to the increasing tensile force.

8. The device according to any one of the previous claims, **characterized in that** the coin conveyor system is a turntable or a coin conveyor chain or a coin conveyor belt.

## Revendications

1. Dispositif pour distribuer des pièces comprenant un système de convoyage de pièces et un conteneur de pièces (12), duquel les pièces peuvent être acheminées vers le système de convoyage de pièces, et une sortie de pièces (20) pour distribuer les pièces, comprenant en outre un moteur électrique (22, 22') pour entraîner le système de convoyage de pièces, dans lequel, le système de convoyage de pièces étant entraîné, les pièces sont transportées par le système de convoyage de pièces vers la sortie de pièces (20) et émises, et le moteur électrique (22, 22') agit sur le système de convoyage de pièces par une transmission ; **caractérisé en ce que** le moteur électrique (22, 22') présente au moins un disque de frein (52, 52') relié avec l'arbre moteur (24) du moteur électrique (22, 22'), qui, lorsque le moteur électrique (22, 22') est non actionné, est en contact inhibant le mouvement de rotation de l'arbre moteur (24) avec au moins une surface opposée (56, 56') du moteur électrique (22, 22') ; et
une force de traction agit sur l'arbre moteur (24) dans une première direction axiale lors d'un actionnement mécanique de la transmission sans actionnement électrique du moteur électrique (22, 22'), de sorte que la force de freinage du au moins un disque de frein (52, 52') avec la au moins une surface opposée (56, 56') du moteur électrique (22, 22'), inhibant le mouvement de rotation de l'arbre moteur (24), augmente quand la force de traction augmente; et
l'arbre moteur (24) est déplacé axialement dans une deuxième direction opposée à la première direction lorsque le moteur électrique (22, 22') est actionné électriquement, moyennant quoi le contact inhibant le mouvement de rotation de l'arbre moteur (24) du au moins un disque de frein (52, 52') avec la au moins une surface opposée (56, 56') du moteur électrique (22, 22') est annulé ;
au moins un disque de frein (52') est placé au sein du moteur électrique (22') sur un arbre d'actionnement, et la surface opposée (56') est formée par une surface interne du moteur électrique (22'), et
le disque de frein (52') constitue un des roulements axiaux de l'arbre moteur (24) au sein du moteur électrique (22').

2. Dispositif selon la revendication 1, **caractérisé en ce que** le contact du au moins un disque de frein (52, 52') avec la au moins une surface opposée (56, 56') du moteur électrique (22, 22'), inhibant le mouvement de rotation de l'arbre moteur (24), est un contact de frottement.

3. Dispositif selon l'une quelconque des revendications 1 ou 2, **caractérisé en ce que** le contact du au moins un disque de frein (52, 52') avec la au moins une surface opposée (56, 56') du moteur électrique (22, 22'), inhibant le mouvement de rotation de l'arbre moteur (24), est un contact à formes complémentaires.

4. Dispositif selon l'une quelconque des revendications précédentes, **caractérisé en ce que** la transmission comprend une tige filetée (26) disposée sur l'arbre moteur (24) et une roue (28) engrenée à la tige filetée (26).

5. Dispositif selon la revendication 4, **caractérisé en ce que** la tige filetée (26) et la roue (28) forment un système de roue et vis sans fin non auto-inhibant.

6. Dispositif selon l'une quelconque des revendications 4 ou 5, **caractérisé en ce que** la tige filetée (26) dispose d'un angle d'hélice de plus de 3°, de préférence de plus de 5°.

7. Dispositif selon l'une quelconque des revendications précédentes, **caractérisé en ce que** la force de freinage entre le disque de frein (52, 52') et la au moins une surface opposée (56, 56') du moteur électrique (22, 22'), inhibant le mouvement rotationnel de l'arbre moteur (24), augmente proportionnellement quand la force de traction augmente.

8. Dispositif selon l'une quelconque des revendications précédentes, **caractérisé en ce que** le système de convoyage de pièces est un disque tournant ou une chaîne de convoyage de pièces ou un tapis de convoyage de pièces.
